Europäisches Patentamt

European Patent Office

Office européen des brevets

(11) Veröffentlichungsnummer: **0 167 968**
**A2**

(12) **EUROPÄISCHE PATENTANMELDUNG**

(21) Anmeldenummer: 85108172.9

(22) Anmeldetag: 02.07.85

(51) Int. Cl.⁴: **B 60 T 17/04**

(30) Priorität: 07.07.84 DE 3425113

(43) Veröffentlichungstag der Anmeldung:
15.01.86 Patentblatt 86/3

(84) Benannte Vertragsstaaten:
CH DE FR GB IT LI

(71) Anmelder: **Neumann, Dietrich**
**Schulstrasse 41**
**D-6923 Waibstadt-Da.(DE)**

(72) Erfinder: **Neumann, Dietrich**
**Schulstrasse 41**
**D-6923 Waibstadt-Da.(DE)**

(74) Vertreter: **Jackisch, Walter, Dipl.-Ing.**
**Menzelstrasse 40**
**D-7000 Stuttgart 1(DE)**

(54) Kupplungskopf für Druckmittelleitungen von Druckmittelbremsanlagen in Fahrzeugen.

(57) Der Kupplungskopf ist für Druckmittelleitungen von Druckmittelbremsanlagen in Fahrzeugen vorgesehen. Er hat einen Ventilkörper (10), der unbeweglich in einem Grundkörper (1) des Kupplungskopfes angeordnet ist. Bei der Verbindung des Kupplungskopfes mit einem Gegenkupplungskopf wird ein Betätigungsglied (8) verstellt, mit dem das Ventil des Kupplungskopfes für den Durchgang des Druckmittels geöffnet wird. Das Betätigungsglied (8) liegt in Schließstellung an einem Anschlag (16) an, in dessen Bereich ein Dichtetement (15) ortsfest angeordnet und wenigstens über einen Teil seines Umfanges gegen Querverformung abgestützt ist. Infolge des unbeweglichen Ventilkörpers (10) hat der Kupplungskoft einen kontruktiv einfachen Aufbau und läßt sich einfach montieren. Das Dichtelement (15) wirkt als statische Dichtung und ist nur einem geringen Verschleiß unterworfen. Infolge der Abstützung des Dichtelementes (15) gegen Querverformung wird eine unzuverlässig starke Verformung des Dichtelementes (15) zuverlässig verhindert.

Fig. 1

EP 0 167 968 A2

Patentanwalt
Dipl.-Ing. **W. Jackisch**
Menzelstr. 40, 7000 Stuttgart 1

Herrn
Dietrich Neumann
Schulstr. 41

6923 Waibstadt-Da.

0167968
A 1-86 666/soo
01.07.1985

## Kupplungskopf für Druckmittelleitungen von Druckmittelbremsanlagen in Fahrzeugen

Die Erfindung betrifft einen Kupplungskopf für Druckmittelleitungen von Druckmittelbremsanlagen in Fahrzeugen nach dem Oberbegriff des Anspruches 1.

Solche Kupplungsköpfe dienen dazu, zusammen mit einem Gegenkupplungskopf die Druckluftverbindung zwischen einem Zugfahrzeug und einem Anhänger herzustellen. Sobald der Gegenkupplungskopf mit dem Kupplungskopf verbunden wird, wird über das Betätigungsglied der Durchgang von der Zuleitung zur Abführleitung für das Druckmittel freigegeben, so daß es von der Zugfahrzeugseite aus zur Anhängerseite gelangen kann. Ist der Gegenkupplungskopf, der sich am Anhänger befindet, nicht mit dem Kupplungskopf des Zugfahrzeuges verbunden, dann verschließt der Ventilkörper den Durchgang von der Zuleitung zur Abführleitung.

Es ist ein Kupplungskopf bekannt (DE-OS 16 30 101), bei dem der Ventilkörper verschiebbar im Grundkörper gelagert ist und unter der Kraft einer Druckfeder steht,
die ihn gegen eine Dichtfläche drückt. Dem Ventilkörper
axial gegenüberliegend befindet sich das Betätigungsglied,
das als Hülse ausgebildet ist und an dem eine Druckfeder
angreift, die im Boden eines verschiebbar im Grundkörper
gelagerten Napfes abgestützt ist. In der Schließstellung
hat das Betätigungsglied Abstand vom Ventilkörper. Wird
der Gegenkupplungskopf an den Kupplungskopf angesetzt,
so wird der Napf angehoben, wobei die Druckfeder das
Betätigungsglied in Richtung auf den Ventilkörper verschiebt. Er wird dadurch von seiner Dichtfläche abgehoben, so daß nunmehr die Druckluft von der Zuleitung
durch die Abführleitung zum Anhänger strömen kann.
Dieser bekannte Kupplungskopf ist konstruktiv aufwendig
ausgebildet und erfordert eine zeit- und arbeitsintensive
Montage. So sind allein für den Ventilkörper zwei zusätzliche Teile erforderlich, nämlich die Druckfeder und
ein Abstützteil für die Druckfeder, so daß schon die
Montage des Ventilkörpers allein umständlich ist. Für
die Druckfeder des Betätigungsgliedes ist der verschiebbar im Grundkörper gelagerte Napf notwendig, der ebenfalls einen zusätzlichen Bauteil bildet, der die Montage
des Kupplungskopfes erschwert. Infolge der großen Zahl
von Bauteilen ist der Kupplungskopf darüber hinaus
störanfällig. Da der Ventilkörper und das Betätigungsglied in einander entgegengerichteten Richtungen federbelastet sind, müssen die zugehörigen Federn genau aufeinander abgestimmt sein, um die notwendigen Bewegungen
des Ventilkörpers und des Betätigungsgliedes zu ermöglichen. So muß die Druckfeder für das Betätigungsglied
stärker ausgebildet sein als die Druckfeder für den
Ventilkörper, damit er beim Aufsetzen des Gegenkupplungskopfes aus seiner Schließstellung in seine Freigabestellung verschoben werden kann. Während des Einsatzes des
Kupplungskopfes besteht die Gefahr, daß die Federn erlahmen, so daß die notwendige Federabstimmung nicht mehr
gegeben ist. Der Ventilkörper ist selbst als Dichtteil
ausgebildet und besteht aus einem entsprechenden Dichtungsmaterial. Da der Ventilkörper in der Schließstellung ständig unter Federkraft an der Dichtfläche anliegt,
ist er sehr hohen Beanspruchungen ausgesetzt. Es besteht hierbei die Gefahr, daß der Ventilkörper unter der
Belastung, zumal wenn er aus einem entsprechend nachgiebigen Material besteht, mit der Zeit radial nach außen
plastisch verformt wird. Dann ist keine einwandfreie Abdichtung mehr gewährleistet.

Bei einem anderen bekannten Kupplungskopf (DE-GM
78 36 112) ist im Grundkörper eine Stufenbohrung vorgesehen, in der das Betätigungsglied gegen Federkraft verschiebbar gelagert ist. Der Ventilkörper weist einen
aus mehreren Teilen bestehenden Stützkörper auf, an
dessen Unterseite das aus elastischem Material bestehende
Dichtelement vorgesehen ist. Das Betätigungsglied liegt
in der Schließstellung unter der Kraft der Druckfeder
und unter dem Druck des Druckmittels an einem am Grundkörper vorgesehenen Anschlag an. Das Betätigungsglied
ist außerdem mit einem weiteren Flansch versehen, der
einen Gegenanschlag bildet, mit dem das Betätigungsglied
in der Schließstellung außerdem am Dichtelement anliegt.
Da das Betätigungsglied in der Schließstellung somit
mit zwei Flächen an entsprechenden Anschlägen anliegt,
muß das Betätigungsglied genau gefertigt sein, damit
es in der Schließstellung an den zugehörigen Anschlägen anliegt. Dies erfordert die Einhaltung sehr enger Fertigungstoleranzen, die die Herstellung dieses Kupplungskopfes verteuern. Das Dichtelement wird durch einen Dichtring gebildet, der beim Zusammenbau des Kupplungskopfes erheblich elastisch gedehnt werden muß. Damit das Dichtelement nämlich in seine Einbaulage gelangen kann, muß es über die Flansche des Betätigungsgliedes geschoben werden. Das Dichtelement muß hierbei überdehnt werden, wodurch es eine Vorschädigung erhalten kann, die zu einem frühzeitigen Ausfall beim Betrieb des Kupplungskopfes führen kann. Infolge der beiden Flansche des Betätigungsgliedes muß der ringförmige Stützkörper mehrteilig ausgebildet sein, damit er in seiner Einbaulage montiert werden kann. Auch dieser Kupplungskopf besteht somit aus einer Vielzahl von Bauteilen, nämlich dem Betätigungsglied, dem mehrteiligen Stützkörper, dem Dichtelement, der Druckfeder und dem Anschlag für das Betätigungselement. Die Montage des Kupplungskopfes wird dadurch erschwert und seine Herstellung verteuert. Die Vielzahl von Bauteilen führt zu einer erhöhten Störanfälligkeit des Kupplungskopfes im Betrieb.

Der Erfindung liegt die Aufgabe zugrunde, den gattungsgemäßen Kupplungskopf so auszubilden, daß er sich aus wenigen Bauteilen einfach montieren läßt und sein Ventilkörper eine lange Einsatzdauer hat.

Diese Aufgabe wird beim gattungsgemäßen Kupplungskopf erfindungsgemäß mit den kennzeichnenden Merkmalen des Anspruches 1 gelöst.

Beim erfindungsgemäßen Kupplungskopf wird der Ventilkörper durch eine Schraube gebildet, die in die Gewindebohrung des Führungsteiles des Grundkörpers geschraubt
wird. Die Ventilschraube kann somit durch einen einfachen
Schraubvorgang im Grundkörper des Kupplungskopfes montiert werden. Weitere Maßnahmen zur Montage der Ventilschraube sind nicht erforderlich. Insbesondere müssen
bei der Herstellung der Ventilschraube keine engen
Fertigungstoleranzen eingehalten werden, weil die Ventilschraube beim Einschrauben in jede gewünschte Lage gebracht werden kann, so daß bei der Montage Fertigungstoleranzen in einfacher Weise berücksichtigt und ausgeglichen werden können. Das Dichtelement läßt sich einfach
im Einbauraum anbringen, vorzugsweise direkt im Einbauraum vulkanisieren, so daß eine Vorschädigung und/oder
eine Überdehnung des Dichtelementes verhindert wird.
Für das Betätigungsglied ist nur ein einziger Anschlag
vorgesehen, der am Schraubenkopf vorgesehen ist,
Dadurch ist gewährleistet, daß das Betätigungsglied, ohne
daß bei seiner Fertigung enge Toleranzen eingehalten
werden müssen, in der Schließstellung zuverlässig am
Anschlag      anliegt, so daß der Durchgang von der
Zuleitung zur Abführleitung für das Druckmittel einwandfrei gesperrt ist. Da die Dicke des Dichtelementes
größer ist als die Tiefe des Einbauraumes, wird das
Dichtelement in der Schließstellung elastisch verformt,
so daß eine einwandfreie Abdichtung gewährleistet ist.
Die über die Zuleitung zuströmende Druckluft kann, obwohl das Betätigungsglied auf dem Führungsteil geführt
ist, ohne Schwierigkeiten über den Durchströmkanal zur
Auslaßöffnung strömen, der zwischen dem Führungsteil
und dem Betätigungsglied vorgesehen ist. Die Ventileinrichtung des erfindungsgemäßen Kupplungskopfes besteht
im Gegensatz zu den bekannten Kupplungsköpfen nur aus
einer geringen Zahl von Bauteilen, nämlich aus der Ventilschraube, dem Betätigungsglied, der Druckfeder und
dem Dichtelement. Dadurch zeichnet sich der erfindungsgemäße Kupplungskopf durch eine konstruktiv sehr einfache
Ausbildung und infolge der geringen Anzahl der Bauteile
durch eine sehr einfache Montage aus. Das Dichtelement
kann schon vor der Montage des Kupplungskopfes mühelos
im Einbauraum angebracht werden. Vor dem Einschrauben
der Ventilschraube wird lediglich das Betätigungsglied
mit seiner Druckfeder in den Grundkörper eingesetzt und
dann die Ventilschraube in den Führungsteil geschraubt.
Der erfindungsgemäße Kupplungskopf ist dann bereits
fertig montiert.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen

Fig. 1          in einem Querschnitt eine erste Ausführungsform eines erfindungsgemäßen
                Kupplungskopfes,

Fig. 2          in einem Axialschnitt den Kupplungskopf
                gemäß Fig. 1, an den ein Gegenkupplungskopf angesetzt ist,

Fig. 3          im Schnitt eine zweite Ausführungsform
                eines erfindungsgemäßen Kupplungskopfes,

Fig. 4          ein Betätigungsglied des erfindungsgemäßen Kupplungskopfes,

Fig. 5 und 6    in Darstellungen entsprechend den Fig.
                1 und 2 eine dritte Ausführungsform
                eines erfindungsgemäßen Kupplungskopfes.

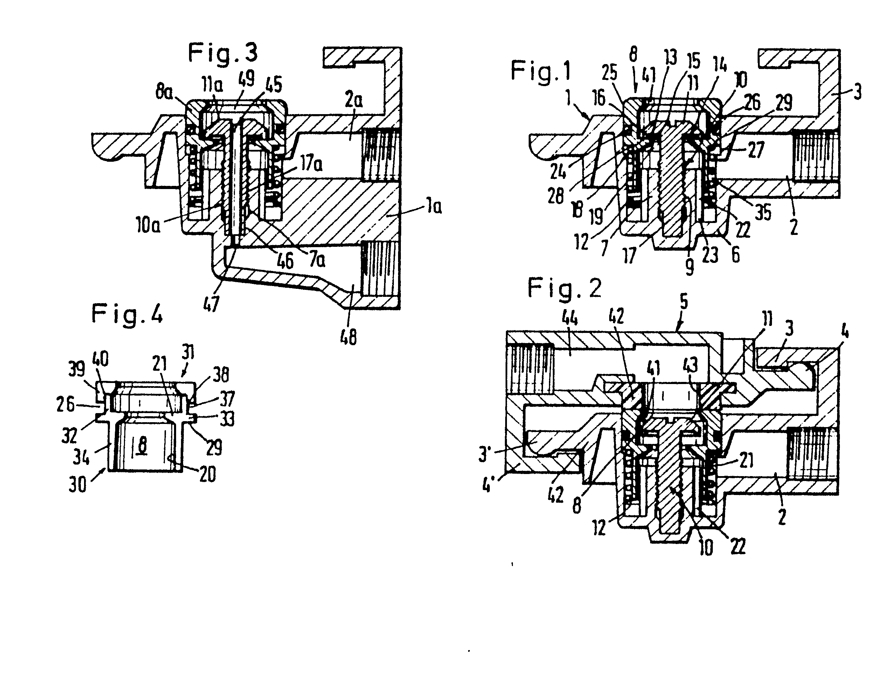

Der Kupplungskopf gemäß Fig. 1 hat einen Grundkörper 1,
der mit einer Zuleitungsbohrung 2 für ein Druckmittel
versehen ist. Der Kupplungskopf ist an einem Zugfahrzeug
vorgesehen und über eine (nicht dargestellte) Druckleitung, die in der Zuleitungsbohrung 2 befestigt ist, an die Bremsanlage
des Zugfahrzeuges angeschlossen. Der einstückig beispielsweise aus Leichtmetall bestehende Grundkörper 1 hat in
bekannter Weise einen im Querschnitt L-förmigen Halterungsteil 3, der einen entsprechenden Gegenhalterungsteil 4
(Fig. 2) eines Gegenkupplungskopfes 5 übergreift, wenn
dieser mit dem Kupplungskopf verbunden wird. Mittels des
Halterungsteiles 3 und des Gegenhalterungsteiles 4 sind
die beiden Kupplungsköpfe formschlüssig miteinander verbunden.

Der Grundkörper 1 hat einen von seinem Boden 6 aufragenden
Führungsteil 7 für ein Betätigungsglied 8. Der Führungsteil
7 ist mit einer Gewindebohrung 9 versehen, in die ein
Ventilkörper 10 geschraubt ist.

Der Ventilkörper 10 ist als Ventilschraube ausgebildet und
hat einen Anschlag 11, an dem das Betätigungsglied 8 unter
der Kraft einer Druckfeder 12 in der Schließstellung
(Fig. 1) anliegt. Der Anschlag 11 wird vorteilhafterweise
durch den Kopf der Ventilschraube 10 gebildet, so daß für
ihn kein gesonderter Bauteil erforderlich ist. In der Kopfunterseite 13 ist eine Ringnut 14 vorgesehen, in die ein
Dichtelement 15 eingelegt ist. Es ist als flacher Dichtring ausgebildet und besteht aus elastischem Material. Um
einen sicheren Sitz des elastischen Dichtelementes in der
Ringnut 14 zu gewährleisten, kann es in den Kopf 11 des
Ventilkörpers 10 eingeknüpft und/oder eingeklebt oder anvulkanisiert sein. Um die notwendige Abdichtung in Schließstellung des Ventiles 8, 10 sicherzustellen, ragt das
Dichtelement 15 geringfügig aus der Ringnut 14, so daß das .
Betätigungsglied 8 in der Schließstellung fest am Dichtelement anliegt. Da das Dichtelement 15 am Anschlag 11 des
Ventilkörpers 10 vorgesehen ist, der unbeweglich im Grundkörper 1 angeordnet ist, bildet das Dichtelement eine
statische Dichtung, deren Beanspruchung im Betrieb des
Kupplungskopfes verhältnismäßig gering ist. Das Dichtelement weist dadurch eine lange Lebensdauer auf.

Das Dichtelement 15 kann am Ventilkörper 10 vormontiert
werden, da dieser nicht einstückig mit dem Grundkörper 1
ausgebildet ist, sondern in dessen Führungsteil 7 geschraubt
wird. Dadurch läßt sich das Dichtelement einfach montieren
und im Bedarfsfalle auch ohne Schwierigkeiten austauschen.

Um eine unzulässige Querverformung des Dichtelementes 15
zu vermeiden, ist es wenigstens über einen Teil seines
Umfanges gegen diese Querverformung abgestützt. Vorzugsweise ist das Dichtelement 15 über seinen gesamten Umfang
gegen Querverformung abgestützt. Hierfür ist am Anschlag
11 ein Abstützteil 16 vorgesehen, der durch den die Ringnut 14 begrenzenden Rand des Anschlages 11 gebildet wird.
Durch diesen Abstützteil 16 ist das Dichtelement 15 radial
nach außen abgestützt. Radial nach innen wird die Ringnut
14 durch einen Schaft 17 des Ventilkörpers 10 begrenzt.
Wie Fig. 1 zeigt, liegt das Dichtelement 15 mit seinem
radial inneren Rand am Schaft 17 an, wodurch in konstruktiv
sehr einfacher Weise auch eine Abstützung des Dichtelementes radial nach innen erreicht wird. Um die Abdichtung
in Schließstellung des Ventiles 8, 10 nicht zu beeinträchtigen, steht die Stirnseite 18 des Abstützteiles 16
geringfügig gegenüber der Unterseite 19 des Dichtelementes
15 zurück. Die Stirnseite 18 des Abstützteiles 16 bildet
gleichzeitig eine Anschlagfläche für das Betägigungsglied
8 in der Schließstellung des Ventiles 8, 10. Dadurch verhindert der Abstützteil 16 auch, daß das Dichtelement 15
durch das Betätigungsglied 8 unzulässig hoch axial verformt
wird. Sobald das Betätigungsglied an der Stirnseite 18 des Abstützteiles 16 zur Anlage kommt, ist eine weitere axiale
Verformung des Dichtelementes 15 nicht mehr möglich.

Der Ventilkörper 10 hat innerhalb des Kupplungskopfes mehrere
Funktionen. Dadurch ist nur ein einziges Bauelement für
diese verschiedenartigen Funktionen erforderlich. Zum einen
dient der Ventilkörper 10 zum Abdichten des Kupplungskopfes,
wenn er nicht mit dem Gegenkupplungskopf 5 verbunden ist.
Außerdem dient er als Anschlag für das Betätigungsglied 8
in der Schließstellung des Ventiles 8, 10. Schließlich ist
der Ventilkörper 10 so ausgebildet, daß das mit ihm verbundene Dichtelement 15 weder radial noch axial unzulässig
hoch beansprucht werden kann. Zum Auswechseln des Dichtelementes 15 muß der Ventilkörper 10 lediglich aus der
Gewindebohrung 9 des Grundkörpers 1 herausgeschraubt werden.

Um die Außenabmessungen des Kupplungskopfes klein zu halten,
ist der Ventilkörper 10 nahezu vollständig im Betätigungsglied 8 untergebracht. Es ist als Hohlkörper ausgebildet,
der den Ventilkörper 10 mit Abstand umgibt und auf dem
Führungsteil 7 des Grundkörpers 1 geführt ist. Wie Fig. 4
zeigt, ist das Betätigungsglied 8 an seiner Innenseite 20
mit mindestens einem Gegenanschlag 21 versehen, mit dem das
Betätigungsglied in der Schließstellung des Ventiles 8, 10
am Anschlag 11 des Ventilkörpers 10 anliegt (Fig. 1). Der
Gegenanschlag 21 ist ein radial nach innen gerichteter,
umlaufender Flansch, mit dem das Betätigungsglied 8 über
den gesamten Umfang in der Schließstellung dichtend am
Dichtelement 15 anliegt. Aus Stabilitäts-und Festigkeitsgründen ist der Flansch 21 radial nach innen verjüngt ausgebildet und hat trapezförmigen Querschnitt. Der Gegenanschlag 21 ist etwa in halber Länge des Betätigungsgliedes
8 vorgesehen.

Damit das durch die Zuleitungsbohrung 2 in den Kupplungskopf strömende Druckmittel bei geöffnetem Ventil 8, 10
(Fig. 2) zum Gegenkupplungskopf 5 strömen kann, sind
zwischen dem Führungsteil 7 des Grundkörpers 1 und dem
Betätigungsglied 8 axiale Durchströmöffnungen 22 vorgesehen.
Sie werden dadurch gebildet, daß der Führungsteil 7 auf
seiner Außenseite mit Abstand zueinander liegende, axial
verlaufende stegförmige Erhöhungen 23 aufweist, die mit
Abstand über den Umfang des Führungsteiles verteilt angeordnet sind und die Durchströmöffnungen in Umfangsrichtung
begrenzen. Das Betätigungsglied 8 seinerseits liegt abgedichtet im Grundkörper 1. Hierzu sitzt auf dem Betätigungsglied 8 eine Dichtung 24, die in einer an der Außenseite
25 des Betätigungsgliedes vorgesehenen Ringnut 26 untergebracht ist. Mit der Außenseite 25 ist das Betätigungsglied 8 axial in einer Bohrung 27 des Grundkörpers 1 verschiebbar geführt. Die Bohrungswandung weist eine Schulter
28 auf, die den Verschiebeweg des Betätigungsgliedes 8
in Richtung auf den Führungsteil 7 begrenzt. Als Gegenanschlag dient eine Schulterfläche 29, die an der Außenseite
des Betätigungsgliedes 8 vorgesehen ist.

Um die Ringnut 26 ohne Fräsarbeiten am Betätigungsglied 8
vorsehen zu können, besteht es aus zwei fest miteinander
verbundenen Teilen 30 und 31 (Fig. 4). Der eine Teil 30
weist einen hülsenförmigen Endabschnitt 32 auf, auf dem der
andere Teil 31 sitzt und diesen teilweise übergreift. Der
hülsenförmige Endabschnitt 32 erstreckt sich von dem radial
nach innen gerichteten Flansch 21 aus axial. In Höhe
dieses inneren Flansches 21 ist der Teil 30 mit einem
radial nach außen gerichteten Flansch 33 versehen, der
rechteckigen Querschnitt hat. Auf der vom Endabschnitt 32
abgewandten Seite schließt an den Flansch 33 ein weiterer
hülsenförmiger Endabschnitt 34 an, der kleineren Außendurchmesser als der Endabschnitt 32 aufweist. Dadurch verbleibt zwischen dem Endabschnitt 34 und der Bohrungswandung des Grundkörpers 1 ein Ringraum 35 (Fig. 1), in
den die Druckfeder 12 eingreifen kann. Sie stützt sich an
der vom Teil 31 abgewandten Unterseite des Flansches 33
ab, die auch den Gegenanschlag 29 für das Betätigungsglied
8 bildet. Die gegenüberliegende Seite 36 des Flansches 33
begrenzt zusammen mit einem Teil des Außenmantels 37 des
Endabschnittes 32 und einer Stirnseite 38 des Teiles 31
die Ringnut 26. Der Teil 31 des Betätigungsgliedes 8 ist
im wesentlichen ringförmig ausgebildet und liegt mit einem
Ringteil 39 auf dem Endabschnitt 32 auf.

Da die Ringnut 26 von den beiden Teilen 30 und 31 begrenzt
wird, wird die Ringnut erst beim Zusammenfügen dieser
beiden Teile gebildet. Es ist daher nicht erforderlich,
die Ringnut 26 durch spanabhebende Bearbeitung herzustellen.
Vielmehr können die beiden Teile 30, 31 des Betätigungsgliedes 8 als Spritzgußteile aus Kunststoff hergestellt
werden, die nachträglich miteinander verbunden werden, vorzugsweise durch Ultraschweißung. Bevor die beiden Teile
zusammengeschweißt werden, wird die Dichtung 24 auf den
Endabschnitt 32 aufgeschoben, bis sie am Flansch 33 zur
Anlage kommt. Auf diese Weise läßt sich die Dichtung 24
sehr einfach am Betätigungsglied 8 anbringen. Die Trennungslinie 40 zwischen den beiden Teilen 30 und 31 des Betätigungsgliedes 8, an der die Ultraschweißung erfolgt, ist
in Fig. 4 mit Punkten gekennzeichnet.

Das Betätigungsglied 8 ragt über den Grundkörper 1, wenn
der Gegenkupplungskopf 5 nicht aufgesetzt ist (Fig. 1).
In dieser Stellung liegt das Betätigungsglied 8 mit seinem
radial nach innen gerichteten Gegenanschlag 21 dichtend
am Dichtelement 15 an. Dadurch ist der Durchgang von der
Zuleitungsbohrung 2 über die Durchströmöffnungen 22 zu
einer Auslaßöffnung 41 versperrt, die in dem über den Grundkörper 1 ragenden Ende des Betätigungsgliedes 8 vorgesehen ist. Wenn der Gegenkupplungskopf 5 auf den Kupplungskopf aufgesetzt wird (Fig. 2), dann wird das Betätigungsglied 8 gegen die Kraft der Druckfeder 12 verschoben. Hierbei hebt der innenseitige Gegenanschlag 21 des Betätigungsgliedes 8 vom Anschlag 11 des Ventilkörpers 10 ab. Der
Gegenkupplungskopf 5 hat in bekannter Weise einen zylindrischen Dichtteil 42, der in Kupplungsstellung auf dem
Betätigungsglied aufliegt und dieses in seiner axial verschobenen Lage hält. Die Auslaßöffnung 41 des Betätigungsgliedes 8 fluchtet mit einer Zylinderöffnung 43 des Dichtteiles 42. Der Kupplungskopf ist mit einem dem Halterungsteil 3 gegenüberliegenden Halterungsteil 3' versehen, der
von einem Gegenhalterungsteil 4' des Gegenkupplungskopfes
in bekannter Weise umgriffen wird. Dadurch sind die beiden
Kupplungsköpfe fest miteinander verbunden. Der Gegenkupplungskopf 5, der am Anhänger des Zugfahrzeuges vorgesehen ist, hat eine Anschlußbohrung 44 für eine Druckluftleitung der Bremsanlage des Anhängers. In Kupplungsstellung ist das Ventil 8, 10 ständig geöffnet, so daß die
zum Bremsen erforderliche Druckluft von der Zuleitungsbohrung 2 über die Durchströmöffnungen 22 und die Auslaßöffnung 41 in die Anschlußbohrung 44 strömen kann.

Der Kupplungskopf kann in Zweileitungs-Druckluftbremsanlagen zur Verbindung der Vorrats-und der Bremsleitungen
des Zugfahrzeuges mit dem Anhängefahrzeug verwendet werden.
Um die Kupplungsköpfe für die Bremsleitung und für die
Vorratsleitung unterscheiden zu können, sind diese in
bekannter Weise mit unterschiedlich eingefärbten (nicht
dargestellten) Schutzkappen versehen, die in entkuppeltem
Zustand (Fig. 1) das überstehende Ende des Betätigungsgliedes 8 abdecken und so einen Zutritt von Schmutz durch
die Auslaßöffnung hindurch zum Ventil 8, 10 verhindern.

Sobald der Gegenkupplungskopf 5 vom Kupplungskopf entfernt wird, schließt das Ventil 8, 10 automatisch. Die Druckfeder 12 drückt das Betätigungsglied 8 wieder in seine Schließstellung, in der der Gegenanschlag 21 am Anschlag 11 des Ventilkörpers 10 zur Anlage kommt.

Bei der Ausführungsform gemäß Fig. 3 ist der Ventilkörper 10a mit einer Durchgangsbohrung 45 versehen, die seinen Schaft 17a und den Anschlag 11a durchsetzt. Der Boden 46 des Führungsteiles 7a des Grundkörpers 1a ist mit einer in die Durchgangsbohrung 45 mündenden Bohrung 47 versehen, die die Durchgangsbohrung 45 mit einer zweiten Zuleitungsbohrung 48 im Grundkörper 1a verbindet. An die Durchgangsbohrung 45 des Ventilkörpers 10a kann eine pneumatische oder hydraulische Signal-oder Steuerleitung angeschlossen werden. Sie ist auch bei geschlossenem Ventil 8a, 10a ständig offen. Die Durchgangsbohrung 45 verbindet die Zuleitungsbohrung 48 mit einem in Strömungsrichtung des jeweiligen Druckmittels hinter dem Ventilkörper 10a liegenden Druckraum 49. Der Kupplungskopf gemäß Fig. 3 ist im übrigen gleich ausgebildet wie die Ausführungsform nach den Fig. 1 und 2.

Sobald der Gegenkupplungskopf aufgesetzt und das Betätigungsglied 8a in der beschriebenen Weise verschoben worden ist, kann das Druckmittel aus der Zuleitungsbohrung 2a durch das geöffnete Ventil 8a, 10a strömen. Über die Durchgangsbohrung 45 kann ein Teil des Druckmittels aber auch in die Zuleitungsbohrung 48 und von dort in die angeschlossene Leitung strömen. Sie verbindet den Kupplungskopf mit einem (nicht dargestellten) Anhänger-Steuerventil, das in bekannter Weise mit der Bremsanlage des Anhängefahrzeuges verbunden ist. Fährt das Zugfahrzeug ohne Anhänger, ist das Ventil 8a, 10a des Kupplungskopfes geschlossen. Dadurch kann die Druckluft nicht mehr in die an die Zuleitungsbohrung 48 angeschlossene Leitung zum Anhänger-Steuerventil strömen. Es ist somit kein Absperrventil im Kupplungskopf der Bremsleitung notwendig, weil bei einer Bremsbetätigung vom Anhänger-Steuerventil dann keine Druckluft ausgesteuert wird.

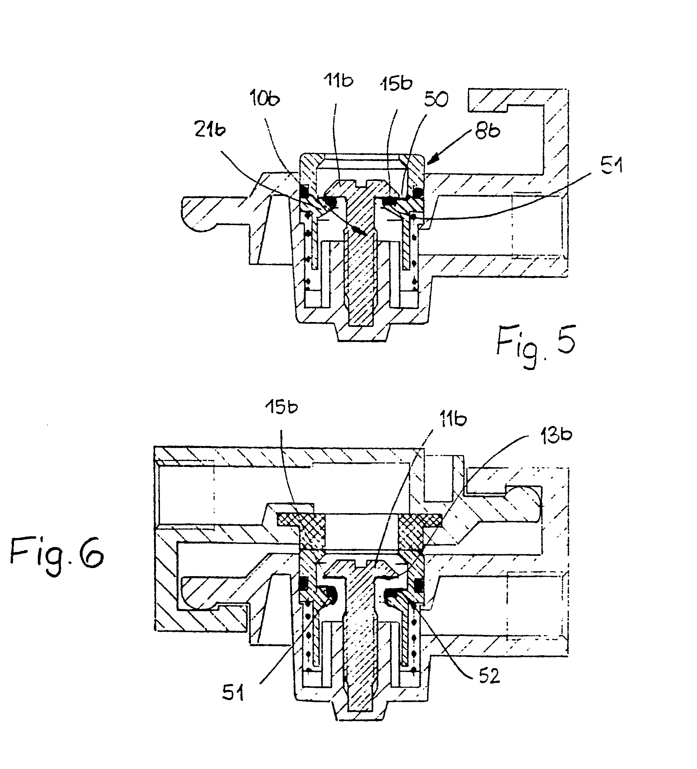

Bei der Ausführungsform nach den Fig. 5 und 6 ist das Dichtelement 15b nicht am Schraubenkopf 11b der Ventilschraube 10b angebracht, sondern am Betätigungsglied 8b. Der als Flansch ausgebildete Gegenanschlag 21b des Betätigungsgliedes 8b weist auf seiner dem Schraubenkopf 11b zugewandten Seite 50 eine Vertiefung 51 auf, in der das Dichtelement 15b untergebracht ist. Die Vertiefung 51 ist gegen die Ventilschraube 10b offen. Das Dichtelement 15b ist ringförmig ausgebildet und besteht aus elastischem Material. Es kann in die Vertiefung 51 eingeklebt sein. Bevorzugt wird das Dichtelement 15b in der Vertiefung 51 durch Vulkanisation angebracht. Im Gegensatz zu den zuvor beschriebenen Ausführungsbeispielen ist die Unterseite 13b (Fig. 6) des Schraubekopfes 11b eben ausgebildet. Das Dichtelement 15b ist über den gesamten Umfang durch die radial äußere Schulterfläche 52 der Vertiefung 51 gegen Querverformung abgestützt, so daß eine unzulässig hohe Verformung des Dichtelementes verhindert wird. Die Dicke des Dichtelementes 15b ist größer als die Tiefe der Vertiefung 51, so daß in der Schließstellung das Betätigungsglied 8b mit dem Dichtelement 15b zuverlässig an der Unterseite 13b des Schraubenkopfes 11b anliegt. Im übrigen ist diese Ausführungsform gleich ausgebildet wie das Ausführungsbeispiel nach den Fig. 1 und 2.

- 16 -

Auch beim Ausführungsbeispiel gemäß Fig. 3 kann das Dichtelement in gleicher Weise am Betätigungsglied vorgesehen sein wie beim Ausführungsbeispiel nach den Fig. 5
und 6.

Bei den beschriebenen Kupplungsköpfen ist die Ventilschraube 10, 10a, 10b nicht mehr verschiebbar, sondern
unbeweglich im Grundkörper 1, 1a angeordnet. Dadurch
sind für ihn keine zusätzlichen Bauteile erforderlich,
wie eine Druckfeder und ein Abstützteil für eine solche
Druckfeder. Dadurch entfallen nicht nur zusätzliche Bauteile, die den Kupplungskopf verteuern, sondern seine
Montage wird auch erheblich vereinfacht. Im Grundkörper
1, 1a ist lediglich das Betätigungsglied 8, 8a, 8b verschiebbar gelagert, das in der Schließstellung an der
gehäusefesten Ventilschraube 10, 10a, 10b anliegt und
so den Durchgang von der Zuleitung 2, 2a zur Abführleitung
41 für das Druckmittel sperrt. Die beschriebenen Kupplungsköpfe sind wenig störanfällig und gewährleisten über
ihre gesamte Einsatzdauer eine einwandfreie Funktion.
Das Dichtelement 15, 15b  unterliegt nur einem sehr
geringen Verschleiß. Da es über seinen Umfang gegen
Querverformung abgestützt ist, können verhältnismäßig
hohe Kräfte auf das Dichtelement ausgeübt werden, ohne
daß die Gefahr besteht, daß es unzulässig stark  nach
außen verformt wird.Dadurch können verhältnismäßig hohe
Dichtkräfte aufgebracht werden, um eine zuverlässige
Abdichtung zu erzielen, ohne daß diese hohen Kräfte
die Lebensdauer des Dichtelementes 15, 15b nachteilig
beeinflussen.

Dipl.-Ing. W. . Aehlisen
Monzelstr. 43, 70.0 Stuttgart 1

**0167968**
A 1-86 666/so
01.07.1985

Herrn
Dietrich Neumann
Schulstr. 41

6923 Waibstadt.-Da.

Ansprüche

1. Kupplungskopf für Druckmittelleitungen von Druckmittelbremsanlagen in Fahrzeugen, mit einem Grundkörper,
   der mindestens eine Zuleitung und wenigstens eine
   Auslaßöffnung für das Druckmittel aufweist und in
   dem ein Ventilkörper unbeweglich untergebracht ist,
   mit einem aus elastischem Material bestehenden Dichtelement, das ortsfest in einem Einbauraum angeordnet
   und wenigstens über einen Teil seines Umfanges gegen
   Querverformung abgestützt ist und mit dem der Zugang
   von der Zuleitung zur Auslaßöffnung absperrbar ist,
   und mit einem Betätigungsglied, das bei der Verbindung
   des Kupplungskopfes mit einem Gegenkupplungskopf
   gegen Federkraft verstellbar ist und den Durchgang
   von der Zuleitung zur Auslaßöffnung für das Druckmittel freigibt und dem am Ventilkörper ein Anschlag
   zugeordnet ist, an dem das Betätigungsglied mit
   wenigstens einem Gegenanschlag unter Kraftbeaufschlagung anliegt,
   dadurch  g e k e n n z e i c h n e t,
   daß der Ventilkörper (10, 10a, 10b) durch eine
   Schraube gebildet ist, die in eine Gewindebohrung (9)
   eines Führungsteiles (7, 7a) des Grundkörpers (1, 1a)

- 2 -

geschraubt ist, daß ein Kopf (11, 11a, 11b) der Ventilschraube (10, 10a,10b) den Anschlag für das Betätigungsglied (8, 8a, 8b) aufweist, welches die Ventilschraube (10, 10a, 10b) mit Abstand umgibt, daß die Dicke des Dichtelementes (15, 15b) größer ist als die Tiefe des Einbauraumes (14, 51), und daß zwischen dem Führungsteil (7, 7a) und dem Betätigungsglied (8,8a, 8b) mindestens ein Durchströmkanal (22) vorgesehen ist, der in Freigabestellung des Betätigungsgliedes (8, 8a, 8b) die Zuleitung (2, 2a) mit der Auslaßöffnung (41, 49) verbindet.

2. Kupplungskopf nach Anspruch 1, dadurch gekennzeichnet, daß der Gegenanschlag (21, 21b) des Betätigungsgliedes (8, 8a, 8b) ein radial nach innen gerichteter umlaufender Flansch ist.

3. Kupplungskopf nach Anspruch 1 oder 2, dadurch gekennzeichnet, daß der Führungsteil (7, 7a) von einem Boden (6) des Grundkörpers (1, 1a) aufragt.

4. Kupplungskopf nach einem der Ansprüche 1 bis 3, dadurch gekennzeichnet, daß der Einbauraum (14) eine Ringnut in der Unterseite (13) des Schraubenkopfes (11, 11a) ist.

5. Kupplungskopf nach Anspruch 4, dadurch gekennzeichnet, daß das Dichtelement (15) radial nach innen an einem Schaft (17, 17a) der Ventilschraube (10, 10a) anliegt.

6. Kupplungskopf nach einem der Ansprüche 1 bis 3,
dadurch gekennzeichnet, daß der Einbauraum (51) durch
eine Vertiefung im Gegenanschlag (21b) des Betätigungsgliedes (8b) ist.

7. Kupplungskopf nach einem der Ansprüche 1 bis 6,
dadurch gekennzeichnet, daß der Durchströmkanal (22)
durch eine axial verlaufende Vertiefung in der Außenseite des Führungsteiles (7, 7a) gebildet ist.

8. Kupplungskopf nach einem der Ansprüche 1 bis 7,
dadurch gekennzeichnet, daß das Betätigungsglied (8,
8a, 8b) aus zwei fest miteinander verbundenen Teilen
(30, 31) besteht.

9. Kupplungskopf nach Anspruch 8, dadurch gekennzeichnet,
daß der eine Teil (30) einen hülsenförmigen Endabschnitt (32) aufweist, auf dem der andere Teil (31)
des Betätigungsgliedes (8, 8a, 8b) sitzt und ihn teilweise übergreift.

10. Kupplungskopf nach Anspruch 8 oder 9, dadurch gekennzeichnet, daß sich der hülsenförmige Endabschnitt
(32) von einem radial nach außen gerichteten Flansch
(33) des übrigen Abschnittes dieses Teiles (30) des
Betätigungsgliedes (8, 8a, 8b) aus erstreckt.

11. Kupplungskopf nach einem der Ansprüche 8 bis 10,
bei dem auf dem Betätigungsglied in einer Ringnut
mindestens eine Dichtung sitzt, dadurch gekennzeichnet,
daß der Flansch (33) des einen Teiles (30) und dessen
hülsenförmiger Endabschnitt (32) sowie eine Stirnseite (38) des anderen Teiles (31) des Betätigungsgliedes (8, 8a, 8b) die Ringnut (26) für die Dichtung
(24) begrenzen.

12. Kupplungskopf nach einem der Ansprüche 8 bis 11, dadurch gekennzeichnet, daß die beiden Teile (30, 31) des Betätigungsgliedes (8, 8a, 8b) aus Kunststoff, vorzugsweise aus Polyamid, bestehen und durch Ultraschweißung miteinander verbunden sind.

13. Kupplungskopf nach einem der Ansprüche 1 bis 12, bei dem der Ventilkörper eine Durchgangsbohrung aufweist, die einen Druckraum mit einer zweiten Zuleitung des Grundkörpers verbindet, dadurch gekennzeichnet, daß der Druckraum (49) in Strömungsrichtung des Druckmittels hinter der Ventilschraube (10a) liegt.

Dietrich Neumann
Schulstraße 41
6923 Waibstadt-Da.

1/2

A 1-86 666/so
0167968

Fig.1

Fig.2

Fig.3

Fig.4

Dietrich Neumann
Schulstraße 41
6923 Waibstadt-Da.

2/2

EA 1-86 666/so

0167968

Fig. 5

Fig. 6